# EUROPÄISCHE PATENTANMELDUNG

(11) **EP 0 677 245 A1**
(43) Veröffentlichungstag der Anmeldung: **18.10.1995**
(21) Anmeldenummer: 95890077.1
(22) Anmeldetag: 07.04.1995
(51) Int. Cl.: A01K 5/02

(54) **Fütterungsanlage**

(30) Priorität: 15.04.1994 AT 788/94
(71) Anmelder: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(57) **Zusammenfassung**

Bei einer Fütterungsanlage mit Zubringern (8, 9, 14) für die gesonderte Zufuhr von trockenen und flüssigen Futterzutaten, Mischeinrichtungen (6) und Ausgabeeinrichtungen zur Futterabgabe an Freßplätze ist jeweils für mehrere Freßplätze (1 - 4) ein gemeinsamer Mischer (6) vorgesehen, dessen Ausgabeeinrichtung (7) gesondert auf jeden Freßplatz einstellbar ist. Jedem Freßplatz (1 - 6) ist eine Identifizierungseinrichtung (5) zugeordnet und es wird eine der Anzahl der möglichen Futterzutaten bei verschiedenen Futterzubereitungen für verschiedene Tiere entsprechende Anzahl von Zubringern (8, 9, 14) mit den Mischer (6) beschickenden Dosiereinrichtungen (10 - 14) vorgesehen, wobei eine zentrale Steuereinheit aus der Identifizierung jedes an einem Freßplatz befindlichen Tieres die Berechtigung zum Futterempfang feststellt, bei unberechtigten Tieren die Futterausgabe sperrt und bei berechtigten Tieren die Ausgabeeinrichtung (7) auf den entsprechenden Freßplatz (1 - 4) einstellt und individuell durch Steuerung der Dosiereinrichtungen und der Mischeinrichtung die Abgabe einer für das jeweilige Tier in Rezeptur und Menge abgestimmten Futterportion an den entsprechenden Freßplatz bestimmt.

## Beschreibung

Die Erfindung betrifft eine Fütterungsanlage zur Abgabe von Mischfutter an mehrere Freßplätze gemäß dem Oberbegriff des Patentanspruches 1.

Eine derartige Fütterungsanlage ist aus der US-A 4 517 923 bekannt. Diese bekannte Anlage dient für die Verabreichung von Trockenfutter, insbesondere Kraftfutter, an in einem Laufstall oder auf der Weide gehaltene Milchkühe. Es werden im Melkstand Gewicht, Milchleistung und andere Kenndaten der Einzeltiere individuell erfaßt und einem Computer eingegeben, der aus diesen Daten die individuelle Futterzusammensetzung und -menge berechnet. Betritt ein Tier einen beliebigen Freßstand, dann wird es auf Grund seiner Identifizierungsmarke oder sonstigen Identifizierungseinrichtung erkannt und erhält eine individuell zugemessene Futterportion in der vorgegebenen Rezeptur, wobei es möglich ist, Futtermischungen aus zwei oder mehreren Bestandteilen herzustellen. Über die Computersteuerung ist es möglich, zwar die Rezeptur für eine bestimmte Kuh beizubehalten, das Futter aber in mehreren über den Tag verteilten Portionen zu verabreichen, so daß jede Kuh nach Erhalt einer Futterportion erst nach einer vorgegebenen Mindestzeit die nächste Teilfuttermenge erhalten kann.

Ähnliche Fütterungsanlagen finden bei der Gruppenhaltung von Schweinen in Verbindung mit einem Fütterungskäfig Verwendung, bei dem in der Nähe eines Futtertroges Fühler von Identifizierungseinrichtungen vorgesehen sind, die jedes Einzeltier nach Halsbändern, Ohrmarken oder Ohrimplantaten identifizieren und über einen Computer für berechtigte Tiere Ausgabeeinrichtungen für Futter steuern, wobei meist Kraftfutter in kleinen trockenen Einzelportionen abgegeben wird und billigeres Grundfutter fallweise auch als Flüssigfutter oder angefeuchtetes Futter, das über Pumpleitungen zugeführt wird, ausgegeben werden kann, wobei es auch möglich ist, nur das Kraftfutter zu dosieren und für das Grundfutter eine ad-libitum-Fütterung berechtigter Tiere vorzusehen.

Werden Tiere im Stall an vorbestimmten Plätzen gehalten, dann ist in den meisten Fällen keine Identifizierung der Einzeltiere am Freßplatz notwendig bzw. vorgesehen. Für entsprechende Fütterungsanlagen, die den ortsgebundenen Tieren individuelle Futterportionen mit teilweise vorgegebener Rezeptur zuteilen, ist es aus der DE-A 36 37 408 bekannt, zwei oder mehrere Zubringerförderer vorzusehen, die an allen Freßplätzen vorbeiführen, wobei jeder Freßplatz einen als Schneckenförderer ausgebildeten Mischerförderer zugeordnet hat, der aus den Zubringerförderern vorgegebene Portionen des dort geförderten Futters entnimmt, gegebenenfalls vermischt und an den jeweiligen Freßplatz abgibt. Die Dosierung wird durch die Umlaufgeschwindigkeit der Zubringerförderer und die Einschaltdauer der Mischerförderer bestimmt.

Ebenfalls nur für Trockenfutter dient eine Anlage nach der US-A 4 890 577, bei der den bestimmten Tieren zugeordneten Freßplätzen Vorratsbehälter zugeordnet sind, die zur Dosierung bis zu verschiedenen Marken gefüllt werden, wobei einschaltbare Zubringerförderer das Futter aus den Vorratsbehältern in den jeweiligen Trog am Freßplatz fördern. Auch hier können mehrere Zubringerförderer für verschiedene Trokkenfuttersorten vorgesehen werden. Eine Identifzierung ist nicht notwendig, da die Tiere durch ihren Standort identifiziert werden.

Auch bei einer aus der EP-B 0 373 147 bekannten Anlage sind die Freßplätze Einzeltieren oder Einzeltiergruppen im Stall zugeordnet, so daß von vornherein feststeht, welches Tier bzw. welche Tiergruppe im Zuge des Fütterungsvorganges eine Futterportion erhält. Es sind Zubringer für die gesonderte Zufuhr von trockenen oder flüssigen Futterzutaten und für jeden Freßplatz Mischeinrichtungen zur Mischung der Futterzutaten und Ausgabeeinrichtungen zur Futterabgabe vorgesehen. Damit besteht Möglichkeit, verschiedene Futterzubereitungen in einem eigenen Mischer für das trockene Futter zuzubereiten, zur Abgabestelle zu transportieren, dort über die Mischeinrichtung mit der notwendigen Menge flüssiger Bestandteile zu vermischen und an den jeweiligen Freßplatz abzugeben. Der grundsätzliche Vorteil einer entsprechenden Fütterungsanlage besteht darin, daß wegen der gesonderten Zufuhr von trockenen und flüssigen Futterzutaten gegenüber reinen Flüssigfütterungsanlagen, bei denen das vorgemischte flüssige Futter von einem gemeinsamen Mischer zu den den Freßplätzen zugeordneten Abgabestellen gepumpt wird, wesentlich kleinere Futtermengen transportiert werden müssen und das bei reiner Flüssigfütterung auftretende Problem einer Qualitätseinbuße durch in Leitungsbereichen verbleibende Futterreste vermieden werden kann, weil das Trockenfutter nicht oder wesentlich weniger als Flüssigfutter gegen längere Lagerung empfindlich ist.

Aufgabe der Erfindung ist die Schaffung einer Fütterungsanlage der eingangs genannten Art, bei der unter Beibehaltung der grundsätzlichen Vorteile einer individuellen Abgabe von nach verschiedenen Rezepturen hergestellten Futtermischungen in individuellen Dosierungen an die einzelnen Tiere einer Tiergruppe der Anlagenaufwand wesentlich reduziert wird und überdies eine Flüssigfütterung bei geringer Kontaminierungsgefahr ermöglicht wird.

Die gestellte Aufgabe wird durch die Merkmale des Patentanspruches 1 gelöst.

In der Praxis kann der Stall bzw. der Aufenthaltsbereich der Tiere nach verschiedenen Gesichtspunkten organisiert werden. Es ist nach einer Variante möglich, mehrere Tiergruppen, z.B. jeweils Schweine gleichen Alters,in getrennten Bereichen zu halten, wobei jedem Aufenthaltsbereich wenigstens ein Freßplatz zugeordnet ist. Bei dieser Organisation wird voraussichtlich für jede Gruppe die gleiche oder eine ähnliche Futterzubereitung vorbestimmt und die Aufgabe der Identifizierungseinrichtung besteht dann im wesentlichen darin, die Berechtigung eines am Freßplatz befindlichen Tieres zum Futterempfang und allenfalls die Größe der Futterportion festzustellen. Mit dem Entwicklungsstadium der einzelnen Tiergruppen kann dann die Rezeptur für jede Abgabestelle entsprechend angepaßt werden. Die erfindungsgemäße Fütterungsanlage ist aber auch dafür geeignet, Tiere mit unterschiedlichem Entwicklungsstadium und unterschiedlichem Futterbedarf gemeinsam zu halten, wobei dann, wenn ein Tier zu irgendeinem Freßplatz tritt, diesem Tier eine individuelle Menge der für dieses Tier bestimmten Futtermischung verabreicht wird. Besonders vorteilhaft ist, daß durch die Zufuhr der Futterzutaten zum Mischer die jeweilige Futtermischung erst unmittelbar vor der Abgabe zubereitet wird und daß trotzdem ganz unterschiedliche Futtermischungen nach voneinander abweichenden Rezepturen hergestellt und verabreicht werden können.

Bei einer Tierhaltung in Einzelgruppen, die je zu einem oder mehreren Freßplätzen Zutritt haben, ist es möglich, die Abgabeeinrichtung jeweils auf die einer Gruppe zugeordneten Freßplätze einzustellen und die Verweildauer so zu wählen, daß wenigstens der Großteil der Tiere der Gruppe während dieser Verweildauer Futter aufnehmen kann. Bei einer individuellen Futterabgabe an beliebige Einzeltiere sollen dagegen die Wartezeiten der an momentan nicht über die Abgabeeinheit beschickbaren Freßplätzen befindlichen Tiere nicht zu lange dauern und man wird daher einem Mischer nur weniger Freßplätze als bei der erwähnten Gruppenhaltung zuordnen. Um trotzdem eine genügende Anzahl von Freßplätzen zu erhalten, kann man eine Weiterbildung gemäß Anspruch 2 vorsehen.

Bei einer Ausführung gemäß Anspruch 3 können von der zentralen Steuereinheit gesteuerte Antriebseinrichtungen für diese Einstellung vorgesehen sein. Die Freßplätze können im Kreis, Halbkreis, aber auch in einer Reihe angeordnet werden.

Freßplatzsperren gemäß Anspruch 4 können im einfachsten Fall als Abdeckungen für einen Futtertrog ausgebildet werden. Es ist aber auch möglich, zu einem Freßplatz ein- und ausfahrbare Futtertröge vorzusehen und/oder die einzelnen Freßplätze wieder in Fütterungskäfigen vorzusehen. Hier kann die Organisation so getroffen sein, daß über die Identifizierungseinrichtung bereits bei der Identifizierung eine Eingangssperre für den Käfig betätigt wird, so daß das auf seine Futterzuteilung wartende, berechtigte Tier von anderen Tieren der Gruppe ungestört bleibt. Bei unberechtigten Tieren bzw. nach Beendigung der individuellen Fütterungszeit wird die Zugangsspere aufgehoben bzw. der Zugang zum Käfig geöffnet.

Weitere Einzelheiten und Vorteile des Erfindungsgegenstandes entnimmt man der nachfolgenden Zeichnungsbeschreibung.

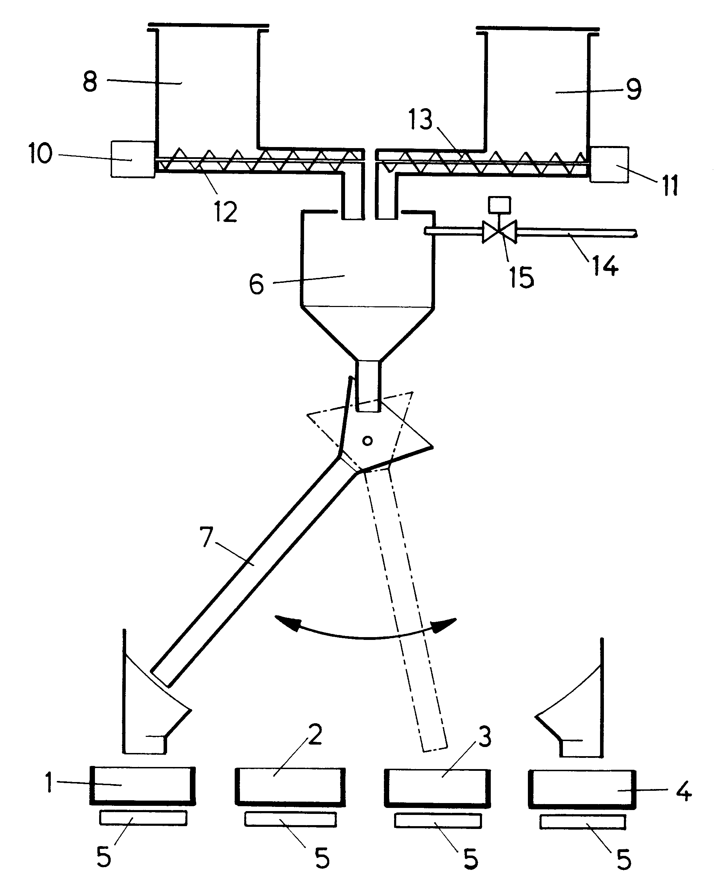

In der Zeichnung ist eine erfindungsgemäße Fütterungsanlage rein schematisch veranschaulicht.

Bei der Fütterungsanlage gemäß dem Beispiel sind vier mit Futtertrögen 1, 2, 3, 4 ausgestattete Freßplätze vorhanden. Jedem Freßplatz 1 - 4 ist ein Fühler 5 einer Identifizierungseinrichtung zugeordnet. Die zu fütternden Tiere tragen Identifizierungsmarken oder -implantate, nach denen sie über die Fühler 5 von einer mit diesen verbundenen Identifizierungseinrichtung einer zentralen Steuereinheit (nicht dargestellt) identifiziert werden können.

Den Freßplätzen 1 - 4 der dargestellten Freßplatzgruppe ist ein gemeinsamer Zyklonmischer 6 zugeordnet, der in ihm aufbereitetes Futter an ein über eine auch von der zentralen Steuereinheit gesteuerte Antriebseinrichtung auf die einzelnen Freßplätze 1 - 4 einstellbares Schwenkrohr 7 abgibt. Im Stall sind Zubringerförderer 8, 9 für Trockenfutterbestandteile vorgesehen, die von Vorratsbehältern beschickt werden und Trockenfutter zu den einzelnen Mischern 6 von mehreren Freßplatzgruppen fördern. Jedem Mischer 6 ist eine antreibbare Dosiereinrichtung, beim Ausführungsbeispiel je eine über einen Motor 10 bzw. 11 antreibbare Dosierschnecke 12, 13 zugeordnet, die aus dem jeweiligen Förderer 8 bzw. 9 eine über die zentrale Steuereinheit bestimmte Futtermenge entnimmt und in den Zyklonmischer 6 fördert. Im Zyklonmischer 6 mündet auch wenigstens eine Flüssigkeitsleitung 14 mit einem ebenfalls von der zentralen Steuereinheit gesteuerten Ventil 15.

Über die Leitung 14 kann Wasser oder eine flüssige Futterzutat, z.B. Molke, zugeführt werden. Man kann der Flüssigkeit auch Aufbaustoffe oder Medikamente beigeben.

Wenn ein Tier zu einem der Freßplätze 1 - 4 tritt, dann erfaßt der Fühler 5 Identifizierungssignale der Identifizierungsmarke, so daß die zentrale Steuereinheit individuell feststellt, welches Tier sich momentan an dem jeweiligen Freßplatz befindet. Ist das Tier zum Futterempfang berechtigt, dann wird das Fallrohr 7 auf den jeweiligen Freßplatz 1 - 4 eingestellt und durch Steuerung der Dosiereinrichtungen 10 - 13 sowie 15 eine Futterportion individuell vorbereitet, durch die Flüssigkeitszufuhr im Zyklonmischer gemischt und über das Fallrohr 7 an den jeweiligen Trog abgegeben.

Beim Ausführungsbeispiel wurden nur zwei Zubringer 8, 9 und eine Leitung 14 dargestellt. Es können selbstverständlich auch mehrere Zubringerförderer für Trockenfutter und mehrere Leitungen für flüssige Futterzutaten vorgesehen werden.

## Patentansprüche

1. Fütterungsanlage zur Abgabe von Mischfutter an mehrere Freßplätze (1 - 4), mit
- einer der Anzahl der möglichen Futterzutaten bei verschiedenen Futterzubereitungen für verschiedene Tiere entsprechende Anzahl von Zubringern (8,9, 14) für die gesonderte Zufuhr der Futterzutaten,
- Dosiereinrichtungen (10 - 13, 15) für die Futterzutaten und
- Mischeinrichtungen (6) zu deren Mischung sowie Ausgabeeinrichtungen (7) zur Futterabgabe an die Freßplätze (1 - 4), wobei
- jedem Freßplatz (1 - 4) eine Identifizierungseinrichtung (5) zur Identifizierung jedes Einzeltieres nach von den Tieren getragenen Identifizierungsmarken zugeordnet ist und
- eine zentrale Steuereinheit aus der Identifizierung jedes an einem Freßplatz befindlichen Tieres die Berechtigung zum Futterempfang feststellt, bei unberechtigten Tieren die Futterausgabe sperrt und bei berechtigten Tieren individuell durch Steuerung der Dosiereinrichtungen (10 - 13, 15) und der Mischeinrichtung (6) die Abgabe einer für das jeweilige Tier in Rezeptur und Menge abgestimmten Futterportion an den entsprechenden Freßplatz (1 - 4) bestimmt, dadurch gekennzeichnet, daß sie als Fütterungsanlage für die Abgabe von Flüssigfutter oder angefeuchtetem Futter ausgebildet ist, bei der
- jeweils für mehrere Freßplätze (1 - 4) ein gemeinsamer, über die Zubringer (8, 9, 14) und Dosiereinrichtungen (10 - 13, 15) mit trockenen und flüssigen Futterzutaten beschickbarer Mischer (6) vorgesehen ist,
- dessen Ausgabeeinrichtung (7) verstellbar ausgebildet und von der zentralen Steuereinheit bei berechtigten Tieren auf den entsprechenden Freßplatz (1 - 4) einstellbar ist.

2. Fütterungsanlage nach Anspruch 1, dadurch gekennzeichnet, daß mehrere, je einem gemeinsamen Mischer (6) zugeordnete Freßplatzgruppen (1 - 4), für zwei oder mehrere Freßplatzgruppen aber gemeinsame Zubringerförderer (8, 9, 14) mit individuellen Dosiereinrichtungen (10 - 13, 15) an den Mischern (6) vorgesehen sind.

3. Fütterungsanlage nach Anspruch 1 oder 2, dadurch gekennzeichnet, daß die Ausgabeeinrichtung als Schwenkrohr (7), Schlauch oder Rüssel ausgebildet, dem Mischer (6) nachgeordnet und gesteuert auf die einzelnen Freßplätze (1 - 4) der Gruppe einstellbar ist.

4. Fütterungsanlage nach einem der Ansprüche 1 - 3, dadurch gekennzeichnet, daß nur über die Identifizierung eines zum Futterempfang berechtigten Tieres durch die Identifierungseinrichtungen (5) freigebbare Freßplatzsperren vorgesehen sind.
